# EUROPEAN PATENT SPECIFICATION

(11) **EP 3 714 683 B1**
(45) Date of publication and mention of the grant of the patent: **29.12.2021**
(21) Application number: 20162790.8
(22) Date of filing: 12.03.2020
(51) Int. Cl.: A01G 17/02

(54) **LEAF STRIPPING MACHINE FOR VINEYARDS**
LAUBSCHNEIDER FÜR WEINSTÖCKE
EFFEUILLEUSE POUR VIGNES

(30) Priority: 15.03.2019 IT 201900003849
(43) Date of publication of application: 30.09.2020
(73) Proprietor: Cane, Enrico, 12064 La Morra (CN) (IT)
(72) Inventor: Cane, Enrico, 12064 La Morra (CN) (IT)
(74) Representative: Robba, Pierpaolo

(56) References cited:
- FR-A1- 2 838 285
- US-A1- 2015 164 005
- US-B2- 9 894 823

## Description

### Technical Field

The present invention relates to a leaf stripping machine for row crops. The machine according to the invention can be used for leaf stripping of row crops of various kinds, in particular, yet not exclusively, for row crops of grapes, i.e. for vineyards.

For ease of description, in the following description reference will be mainly made to a leaf stripping machine for vineyards.

### Prior Art

In the field of row crops, mainly of vineyards and fruit tree crops, it is often necessary to remove part of the foliage, in particular in the area of the plant at the areas of the fruits or close thereto. The leaf stripping operation is carried out for better aeration of the area of the fruits and for improving the exposure of the fruits to phytochemicals, which is beneficial to the effectiveness of the treatment with these products. Leaf stripping therefore leads to generally obtain healthier and riper fruits and, in the case of vineyards, to obtain a wine with better quality.

To perform a leaf stripping operation in a row crop, the use of leaf stripping machines is known. These machines are generally associated with a motorized vehicle, for example an agricultural tractor, which travels between the rows of crops while towing the leaf stripping machine. Such leaf stripping machines made according to prior art include leaf stripping devices suitable for stripping the leaves of a row crop. According to prior art, these leaf stripping devices comprise two counter-rotating rolls, of which at least one motorized and the other one driven, said rolls being associated with a suction device which, by suction, helps the leaves of a row crop to come close to the rolls. The leaves are stripped by the rolls and conveyed along a channel thanks to the flow created by the suction device and evacuated form the leaf stripping machine through said channel.

IT1404453 discloses a multi-purpose bilateral platform comprising two opposing units suitable for double-row, single-sided leaf stripping in row crops. Each of the platform units comprises a pair of counter-rotating leaf stripping rolls associated with a suction device for removing leaves and for helping leaves to come close to the rolls. According to the teaching of this document, each leaf stripping unit is equipped with a curved shield having the function of avoiding damages to the fruits encountered by the platform during the leaf stripping operation. This document also discloses the possibility of equipping each unit with two pairs of leaf stripping rolls and respective suction devices.

US 2015/164005 A1 discloses another leaf stripping machine.

A drawback of these machines made according to prior art is that, during the leaf stripping operation, both the rear leaves of the row, i.e. the leaves of the row distal to the leaf stripping machine, and the front leaves of the row, i.e. the leaves of the row closer to the leaf stripping machine, are stripped, so that fruits are directly exposed to the sun rays.

A first object of the invention is to provide a leaf stripping machine for row crops, which is able to eliminate mainly the inner leaves of the wall of leaves of a row, i.e. the leaves distal to the leaf stripping machine, while leaving instead attached to the plant the outermost leaves of the wall of leaves of the row, i.e. the leaves closest to the leaf stripping machine. The outermost leaves of the wall of leaves of a row that remain attached to the plant form a protective layer for the fruits and for the plant itself, so that they are not directly exposed to the sun rays. This result is similar to the one that could be obtained by a precision leaf stripping manually performed by an operator.

Another object of the invention is to provide a leaf stripping machine for row crops, which is able to carry out a leaf stripping operation such that the fruits and the plant are more exposed to treatments with phytochemicals which are periodically performed. In this way, the row crop obtains all the beneficial effects of the various treatments that are carried out in various periods of the year.

Not least object of the invention is to provide a leaf stripping machine, which can be industrially manufactured at advantageous costs.

These and other objects are achieved by the leaf stripping machine for row crops as claimed in the appended claims. The claims form an integral part of the technical teachings herein provided in connection with the invention.

### Summary of the Invention

The leaf stripping machine for vineyards according to the invention comprises a supporting structure which can preferably, but not exclusively, be a plate, a frame, such as for example a grid frame, a tubular frame or a parallelepiped frame, or a box-like structure, especially a box-like bin. When the machine is in a working configuration, i.e. resting on the ground, possibly associated with a motorized vehicle such as, for example, an agricultural tractor, the supporting structure defines a top flank, a bottom flank, a front flank and a rear flank of the machine. In this configuration, the bottom flank is proximal to the ground and the top flank is distal to the ground, while the front flank and the rear flank are substantially perpendicular to the ground. Furthermore, the machine preferably comprises at least one skid, which is secured, preferably in a removable manner, to the supporting structure by means of adequate securing means. The skid preferably has a circular section and extends in a longitudinal direction, preferably parallel to a direction of advancement of the leaf stripping machine. According to the invention, the leaf stripping machine comprises a plurality of leaf stripping modules, suitable for stripping leaves of a wall of leaves of a row crop, for example a vineyard, by using pairs of counter-rotating leaf stripping rolls, which are preferably arranged with their rotation axis in a vertical direction when the machine is working, and at least one suction device. The plurality of leaf stripping modules makes using the machine favourable even in the case of row crops having a considerable development in height and with fruiting distributed at various heights. The leaf stripping modules are associated with at least one suction device which helps leaves to come close to the rolls, and which can be common to the plurality of leaf stripping modules, or each module can be associated with a corresponding suction device. The at least one suction device creates an air flow for the leaves torn by the rolls and it can be contained within a casing, or can be associated with a conveyor duct for foliage. The at least one suction device is preferably associated with an engine, which can also be reversible, so as to reverse the air flow and cause the discharge of foliage. Preferably, at least one of the counter-rotating rolls of the plurality of leaf stripping modules is motorized and has grooves on its entire outer surface and is also preferably made of rigid material. The other roll of the pair of rolls is preferably driven, i.e. idle, and is driven in rotation by the first, motorized roll. The surface of the idle roll is preferably made of a compressible and elastic material, for example rubber. In addition, each leaf stripping module comprises an opening, for the passage of leaves, in a distal plane, substantially parallel to a working plane of the machine. Preferably, the leaf stripping modules can be associated with conveyor ducts for discharging the stripped foliage.

According to the invention, at least one of the leaf stripping modules also includes a separating knife, preferably a wedge-shaped, or triangular, or spearpoint-shaped separating knife, which extends at the front of the opening of the corresponding leaf stripping module. According to the invention, the separating knife preferably has the function of creating a gap in the direction of advancement of the leaf stripping machine, so as to move aside the outermost leaves of the vineyard, i.e. the leaves closest to the machine, and make the innermost leaves of the vineyard accessible to the plurality of leaf stripping modules. Preferably, the separating knife defines at its rear a frame, which extends around, or rather surrounds, the opening of the corresponding leaf stripping module. Even more preferably, the separating knife defines at its front an isosceles triangle-shaped portion extending in a forward direction with respect to the opening of the corresponding module. The angle formed between the congruent sides of the isosceles triangle-shaped portion defined by the separating knife, is preferably associated, at half of the opening of the leaf stripping module, to a longitudinal direction, substantially parallel to the direction of advancement of the machine. The width of the opening of the leaf stripping module is also preferably equal to the length of the leaf stripping rolls of the pair of rolls located downstream of said opening in the direction of suction of the leaves. Advantageously, according to the invention, between the leaf stripping modules and the front flank of the supporting structure, the leaf stripping machine comprises separating elements, cooperating with the at least one separating knife, which define a corresponding separating edge, capable of moving aside the outermost leaves of the foliage of a vineyard, so as to make the innermost leaves of the foliage accessible to the plurality of leaf stripping modules. Preferably, but not exclusively, the separating elements comprise a rod or a bar or a blade, comprising a first substantially rectilinear portion which preferably extends in a plane substantially parallel to the plane of the at least one separating knife, and a second portion bent towards the supporting structure and substantially perpendicular to said supporting structure. Preferably, the second portion is aligned along a longitudinal direction with the first rectilinear portion of a corresponding separating element. Even more preferably, the second portion bent towards the supporting structure is inclined with respect to the direction of the first rectilinear portion of a corresponding separating element, more particularly inclined towards the bottom flank of the supporting structure when the machine is working. The separating elements are also preferably made of metal.

The first rectilinear portion of the separating element is preferably connected to the at least one separating knife, while the second portion bent towards the supporting structure is connected to the supporting structure or to the at least one skid. Furthermore, always according to a preferred embodiment of the invention, the distance between the supporting structure and the plane defined by the openings of the leaf stripping modules is lower than the distance between the supporting structure and the at least one skid. The securing means for securing the at least one skid to the supporting structure preferably, yet not exclusively, comprise telescopic rods, preferably perpendicular to the supporting structure, so as to allow to adjust the distance to be kept between the machine and the wall of leaves of the row crop on which the machine operates. Alternatively, the securing means for securing the at least one skid comprise special brackets that makes removable coupling of the skid to the supporting structure and adjusting of the distance easier. Preferably, the at least one skid has two ends, a front end at the front flank of the supporting structure and a rear end at the rear flank of the supporting structure when the machine is working, which ends are slightly bent towards the supporting structure, more preferably at an angle of between 30° and 60°, for making the foliage slide while the machine advances.

Furthermore, the leaf stripping machine may comprise an automated version thereof, in which at least one sensor, and, more preferably a plurality of sensors, is provided. Said sensors may be, for example: sensors for detecting the distance of the machine from the stems of the crop on which the machine is working, sensors for detecting the presence / absence of foliage, sensors for detecting progression / interruption of the advancement of the machine. Said sensors will also preferably be connected to an electrical circuit associated with an electronic control unit.

The operation of the leaf stripping machine for vineyards according to the invention will be briefly described below.

The leaf stripping machine according to the invention is preferably equipped with wheels and can be either of the self-propelled type, i.e. equipped with its own motor and with at least one driving wheel for advancing on the ground, or towed, i.e. intended to be associated with a motorized vehicle, for example an agricultural tractor.

During leaf stripping, the operator drives the machine along the rows of the crop, for example a vineyard, with the portion of the machine provided with the plurality of leaf stripping modules facing the foliage of the part of the row that needs to be leaf stripped. The machine advances along a direction substantially parallel to the row. The operator approaches the leaf stripping machine to the row and the at least one skid allows to keep a predetermined distance from the wall of leaves, so as to avoid damaging the plants. As the machine advances, the at least one separating knife creates a gap in the foliage of the row, along a direction of advancement of the machine. The separating knife, preferably in cooperation with separating elements, moves aside the front, outermost leaves of the wall of leaves, i.e. the leaves which are closest to the machine, making the rear, innermost leaves of the wall of leaves, i.e. the leaves which are distal to the leaf stripping machine, accessible to the leaf stripping modules. The leaf stripping modules, being associated with at least one suction device which cooperates with the counter-rotating leaf stripping rolls, strip the leaves, taking them along a flow channel created by the suction device, then evacuating them from the leaf stripping machine. Consequently, the outer leaves of the row, i.e. the leaves closest to the leaf stripping machine, are not stripped by the machine. These outermost leaves of the wall of leaves, which remain attached to the plant after leaf stripping, serve to protect the fruits from direct exposure to the sun rays. In this way, a leaf stripping similar to the one that could be achieved manually by an operator, who would select only, or mainly, the rear and innermost leaves of the wall of leaves, to be removed, is obtained. The leaf stripping machine according to the invention can also be permanently associated with a motorized vehicle, for example an agricultural tractor. In this case the machine is preferably, yet not exclusively, mounted at the rear of the tractor, for example by means of a three-point hitch, or at the front of the tractor. In any case, the machine is mounted with the leaf stripping modules facing laterally, i.e. towards the foliage of the crop row on which leaf stripping is carried out. According to this embodiment, preferably the machine has no wheels and includes fastening means suitable for fastening the machine to the vehicle, such as to use, for example, the three-point hitch generally provided rearwards on agricultural tractors. Furthermore, the machine may comprise hydraulic cylinders or groups of electromechanical elements which, in cooperation with a manual control, possibly assisted by a group of sensors, can control the positioning of the machine with respect to the wall of leaves on which leaf stripping is to be carried out, in order to correctly carry out leaf stripping. In a particular embodiment of the invention, the leaf stripping machine comprises leaf stripping modules facing opposite parts of a supporting structure arranged at the centre of the machine, so as to allow to carry out a double-row leaf stripping when the vehicle advances between the rows of a vineyard. In this way, during a single path of the vehicle, it is possible to simultaneously strip leaves from two walls of leaves corresponding to two rows of a vineyard facing the leaf stripping machine. In another particular embodiment of the invention, the machine is equipped with electromechanical means for tilting the machine by 180° with respect to a median longitudinal vertical plane, so as to allow to carry out leaf stripping in two advancing directions of the machine opposite to each other and always on the side facing the same direction, for example facing south, of the wall of leaves of two rows. Thanks to this configuration, the agricultural tractor with which the machine is associated will be able to leaf stripping, both on the outward path between row and on the return path, side walls of adjacent rows facing the same directions, for example facing south. Furthermore, in accordance with a further embodiment of the invention, due to the fact that the second portion of a corresponding separating element is associated with a driving member which controls the orientation and inclination of said portion relative to the bottom and top flanks of the machine, it is possible to orient the separating elements in the most effective way.

For ease of description, let's assume that the leaf stripping machine for vineyards includes leaf stripping modules all facing the same side. The vehicle advances between the rows of a vineyard, with the leaf stripping machine mounted in the working position, i.e. with the portion comprising the leaf stripping modules facing the wall of leaves that has to undergo leaf stripping. The at least one skid of the leaf stripping machine keeps a predetermined distance between the machine and the wall of leaves of the row crop. The tractor advances along the direction of the rows, bringing the leaf stripping machine closer to the row that has to undergo leaf stripping. At the same time the machine carries out such leaf stripping. The separating knife creates a gap in the foliage of the row, along the direction of advancement of the machine and substantially parallel to it. In cooperation with separating elements, the separating knife moves aside the outermost leaves of the row, i.e. the leaves closest to the leaf stripping machine, so as to allow the leaf stripping modules to access the innermost leaves of the row, i.e. the leaves distal to the leaf stripping machine. The leaf stripping modules, associated with at least one suction device cooperating with the counter-rotating leaf stripping rolls, strip the innermost leaves of the row. The stripped leaves are conveyed through a flow channel which is in communication with the leaf stripping modules and the at least one suction device, until they are discharged from the leaf stripping machine. The outermost leaves of the wall of leaves, i.e. the leaves closest to the leaf stripping machine, which remain attached to the plant after the leaf stripping operation, serve to create a protective layer for the fruits of the row and for the plant itself, so that they are not directly exposed to the sun rays. This result is similar to the one that could be obtained with a precision leaf stripping operation manually carried out by an operator.

### Brief Description of the Drawings

Some preferred embodiments of the invention will be provided by way of non-limiting example with reference to the attached figures in which:
- Fig. 1 is a side view of a leaf stripping machine according to a first embodiment of the invention;
- Fig. 2 is a perspective view from the front of the leaf stripping machine of Fig. 1;
- Fig. 3 is a rear view of the leaf stripping machine of Fig. 1;
- Fig. 4 is a perspective view of a leaf stripping module according to a variant;
- Fig. 5 is a plan view of the leaf stripping module of Fig.4;
- Fig. 6A is a front view of a leaf stripping machine according to a second embodiment of the invention;
- Fig. 6B is a perspective view of the leaf stripping machine shown in Fig. 6A;
- Fig. 7A is a front view of a leaf stripping machine according to a third embodiment of the invention;
- Fig. 7B is a perspective view of the machine shown in Fig. 7A;
- Fig. 8A is a plan view of a fourth embodiment of the machine, not according to the invention;
- Fig. 8B is a perspective view of the machine shown in Fig. 8A.

### Description of Some Preferred Embodiments of the Invention

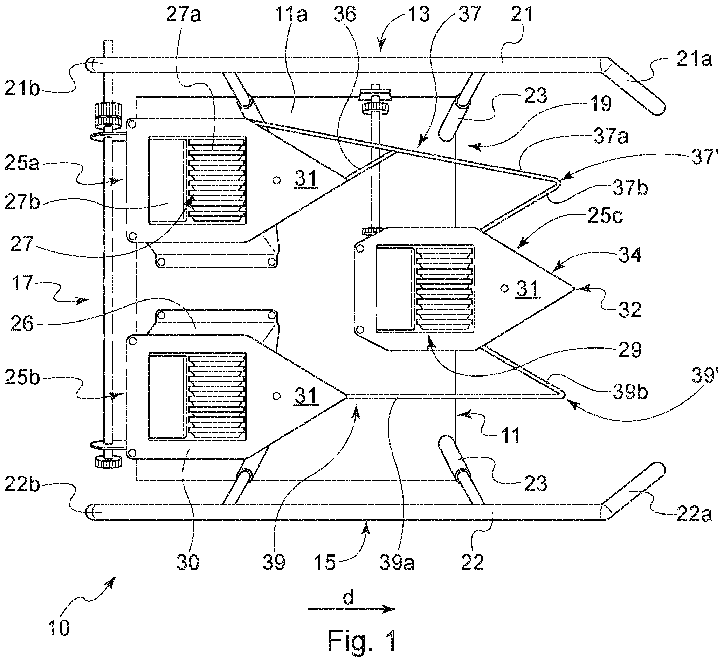

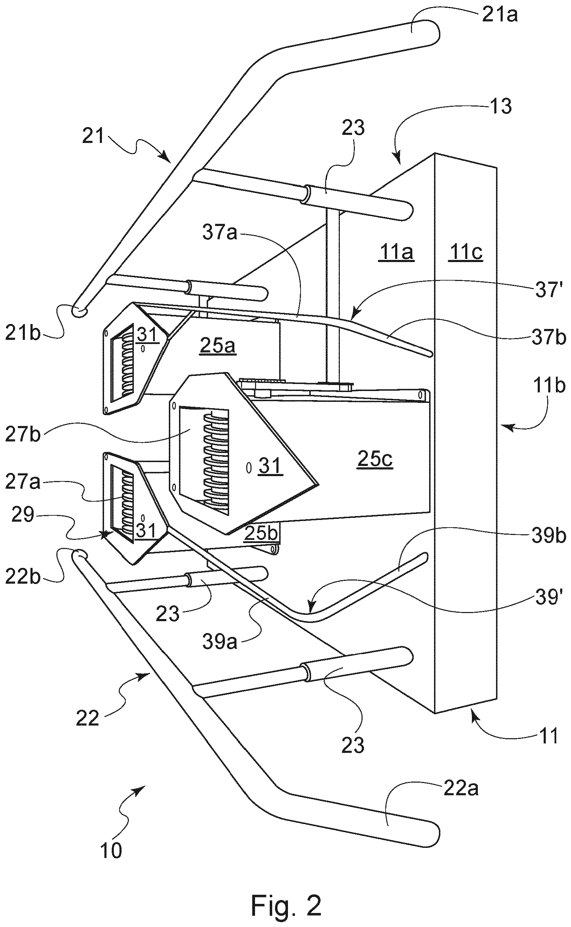

Details and elements similar - or having a similar function - to those of the first shown embodiment have been given the same references, to which the value 100, 200, 300 for the first, second and third embodiments respectively have been added. For sake of conciseness, the description of these details and elements will not be repeated again, but reference will be made to what has been previously explained in the description of the first embodiment. Referring to Figs. 1 to 3, a first embodiment of the leaf stripping machine for row crops according to the invention is shown. The leaf stripping machine is indicated as a whole by reference 10 and comprises a supporting structure 11 which, in this embodiment, is made with a box-like shape. In other embodiments of the leaf stripping machine 10, the supporting structure 11 may comprise a grid frame, a tubular frame or a structure of a type different from those listed above, yet suitable for the purpose. In the shown embodiment, the structure 11 has a substantially parallelepiped shape and preferably comprises a pair of parallel plates, a first inner plate 11a, a second outer plate 11b and side walls 11c. When the machine 10 is in a working configuration, the supporting structure 11 defines a top flank 13, a bottom flank 15, a rear flank 17 and a front flank 19. In the shown embodiment, the top flank 13, the bottom flank 15, the rear flank 17 and the front flank 19 correspond to the walls 11c of the structure 11.

In the shown embodiment, the leaf stripping machine further comprises two skids 21, 22 secured to the structure 11, namely to the inner plate 11a of the structure 11, by means of suitable securing means 23. The skids 21, 22 extend in a longitudinal direction, substantially parallel to a direction "d" of advancement of the leaf stripping machine when it strips leaves from a row crop. A first skid 21 is located near the top flank 13 of the structure 11, while a second skid 22 is located near the bottom flank 15 of said structure 11. Each skid has two ends 21a, 21b, 22a, 22b, which are slightly bent towards the inner plate 11a of the structure 11 for allowing the foliage of the row to slide on the skid when the machine 10 operates along a wall of leaves of a row crop, thus preventing the skids from tearing away the branches or shoots of the crop. The angle formed between the two ends 21a, 21b, 22a, 22b of the skid 21, 22 bent towards the inner plate 11a of the structure 11 and the rectilinear part of the skid is preferably between 30° and 60° and is even more preferably about 45°. In other embodiments, the leaf stripping machine 10 comprises a single skid 21 or 22 which may also be arranged centrally with respect to the supporting structure 11, or two skids 21, 22 arranged in other positions than the ones shown in the figures, for example the skids 21, 22 can be placed outside the supporting structure 11. In this preferred embodiment, the securing means 23 for securing the skids 21, 22 to the inner plate 11a of the structure 11 comprise corresponding rods, which are substantially perpendicular to the supporting structure 11. Said rods preferably are telescopic rods, so as to allow the operator to choose a predetermined distance that is to be kept between the leaf stripping machine 10 and the leaves of the wall of leaves of a row of a row crop. Furthermore, in the shown embodiment, the leaf stripping machine 10 comprises three leaf stripping modules 25a, 25b, 25c, facing towards the inner plate 11a of the structure 11 and associated with a suction device 40, which by mechanical tearing by means of the rolls and suction, carry out a leaf stripping operation. The suction device 40, in the shown embodiment, is common to all the leaf stripping modules 25a, 25b, 25c and is on the side opposite to the portion of the structure 11 to which the leaf stripping modules 25a, 25b, 25c are fixed, i.e. it is oriented towards the outer plate 11b of the structure 11. The structure 11 preferably defines in its inside a compartment or a cavity 35 common to the leaf stripping modules 25a, 25b, 25c and in flow communication with the suction device 40 and with the leaf stripping modules 25a, 25b, 25c. The leaves stripped by the leaf stripping modules 25a, 25b, 25c pass through the cavity 35 and are subsequently sucked along a flow channel 33 in communication with the suction device 40 until they are discharged from the leaf stripping machine 10. In another embodiment, each module may be associated with a dedicated suction device 40 and, therefore, in this case the machine 10 will comprise a plurality of leaf stripping modules 25a, 25b, 25c associated with a plurality of suction devices 40.

Each leaf stripping module 25a, 25b, 25c comprises a pair of counter-rotating leaf stripping rolls 27. The pair of counter-rotating rolls 27 comprises a first, driving, i.e. motorized, roll 27a, which is substantially made of a rigid material and has grooves, for example substantially helicoidal or spiral-shaped grooves, on its entire outer surface. The pair of counter-rotating rolls 27 comprises a second, driven, i.e. idle, roll 27b, which is driven in rotation by the first, driving roll 27a and has a smooth outer surface, made of an elastic, preferably not highly wettable, material, for example rubber. Each pair of counter-rotating rolls 27 is received inside a substantially parallelepiped-shaped housing 26, which is fixed to the structure 11. The leaf stripping modules 25a, 25b, 25c are substantially offset from one another, so as to carry out a leaf stripping operation even if the leaves are distributed at different heights. In particular, in the shown embodiment, two of the three leaf stripping modules 25a, 25b are located near the rear flank 17 of the structure 11, one closer to the top flank 13 of the structure 11 and the other closer to the bottom flank 15 of the structure 11. The third leaf stripping module 25c is located near the front flank 19 of the structure 11 and substantially in a middle position relative to the top flank 13 and the bottom flank 15. Therefore, as a whole, in the illustrated embodiment, the three leaf stripping modules 25a, 25b, 25c are arranged on the structure 11 substantially at the vertices of an isosceles triangle. Each leaf stripping module 25a, 25b, 25c is provided with an opening 29 for the passage of the leaves, arranged on a plane distal to the inner plate 11a and substantially parallel to a working plane of the machine 10. The opening 29, in the illustrated embodiment, has a substantially rectangular shape. In other embodiments, the opening 29 may have a square shape, a circular shape, or other shapes.

Advantageously, each leaf stripping module 25a, 25b, 25c is equipped with a triangular separating knife 31, which extends at the front of the opening 29. The separating knife 31 also preferably defines a frame 30 surrounding the opening 29. The separating knife 31 defines a portion 34, having the shape of an isosceles triangle, located forward from the corresponding opening 29. Furthermore, the separating knife 31 comprises, in particular, a plate element which, in the shown embodiment, extends on a plane which substantially coincides with the plane of the opening 29. The tip 32, formed by the congruent sides of the isosceles triangle-shaped portion 34 of the separating knife 31, faces the front flank 19 of the housing 11. The angle formed by the congruent sides of the isosceles triangle-shaped portion 34 is also preferably located along a longitudinal direction that intersects the opening 29 and the pair of counter-rotating rolls 27, approximately at half the respective length of said rolls.

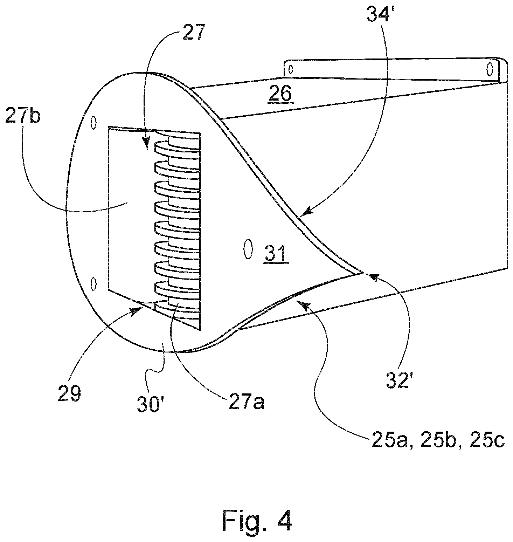

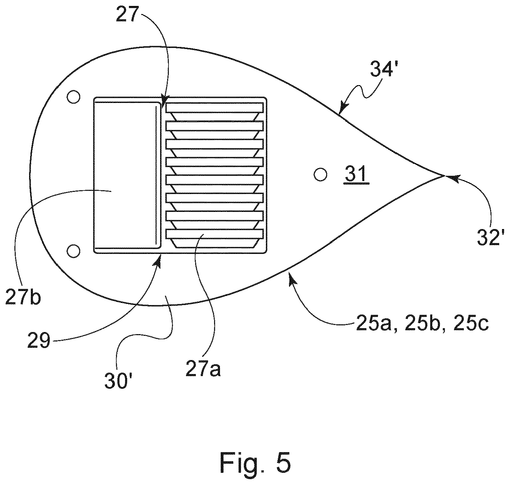

Referring in particular to Figs. 4 and 5, another embodiment for the separating knife 31' is shown, in which the separating knife 31', together with the frame 30', has a substantially teardrop shape. In this shown embodiment, the outer part of the frame 30' has a rounded shape, free of edges, which turns out to be particularly advantageous in a leaf stripping operation, as it allows to avoid to tear the branches of a vineyard during the advancement of the leaf stripping machine 10. Furthermore, this embodiment of the separating knife 31' and of the frame 30' gives a more pleasant physical appearance to the leaf stripping modules 25a, 25b, 25c.

Referring again to Figs. 1 to 3, separating elements 37, 39 are provided between the leaf stripping modules 25a, 25b and the front flank 19 of the supporting plate, which separating elements define a corresponding separating edge 37', 39', which is capable of moving aside the front leaves of the row, i.e. the outermost leaves close to the leaf stripping machine 10, so as to allow the leaf stripping modules 25a, 25b, 25c to strip the rear leaves only of the row, i.e. the innermost leaves, distal to the leaf stripping machine 10. In particular, in the shown embodiment, the separating elements 37, 39 have a first longitudinal rectilinear portion 37a, 39a, and a second portion 37b, 39b which is bent towards the inner plate 11a of the housing 11 and is substantially perpendicular to said inner plate 11a. The separating elements 37, 39, in this embodiment, are defined by corresponding rods or metal bars and are associated with the leaf stripping modules 25a, 25b, 25c. The longitudinal rectilinear parts 37a, 39a of the separating elements 37, 39 are oriented substantially towards the front flank 19 of the housing 11, i.e. substantially in front of the leaf stripping modules 25a, 25b, in the direction of advancement of the machine 10. Therefore, when the machine 10 advances in the direction "d", the leaves of the wall of leaves of the row crop on which the machine operates are intercepted at first by said separating elements 37, 39 and, subsequently, by the leaf stripping modules 25a, 25b to which the separating elements 37,39 are associated. In the shown embodiment, a first separating element 37 has its longitudinal rectilinear portion 37a connected to the frame 30 surrounding the opening 29 of the leaf stripping module 25a, in an area close to the top flank 13. Therefore, in this configuration, the rectilinear portion 37a substantially defines a corresponding deflector with respect to the knife 31a associated with the leaf stripping module 25a. A reinforcing element 36, having the purpose of stiffening the separating element 37, is also preferably provided between the tip 32 of the knife 31 and the rectilinear portion 37a. In the illustrated embodiment, a second separating element 39 has its rectilinear portion 39a connected to the tip 32 of the leaf stripping module 25b. In this configuration, the rectilinear portion 39a substantially extends in a direction parallel to the direction of the skids 21, 22. In other embodiments, the separating elements 37, 39 may comprise a blade or an equivalent element, with which the same effect can be obtained, i.e. the effect of creating a separation edge for the leaves intercepted during the advancement of the machine, in a plane substantially parallel to the openings 29 of the leaf stripping modules.

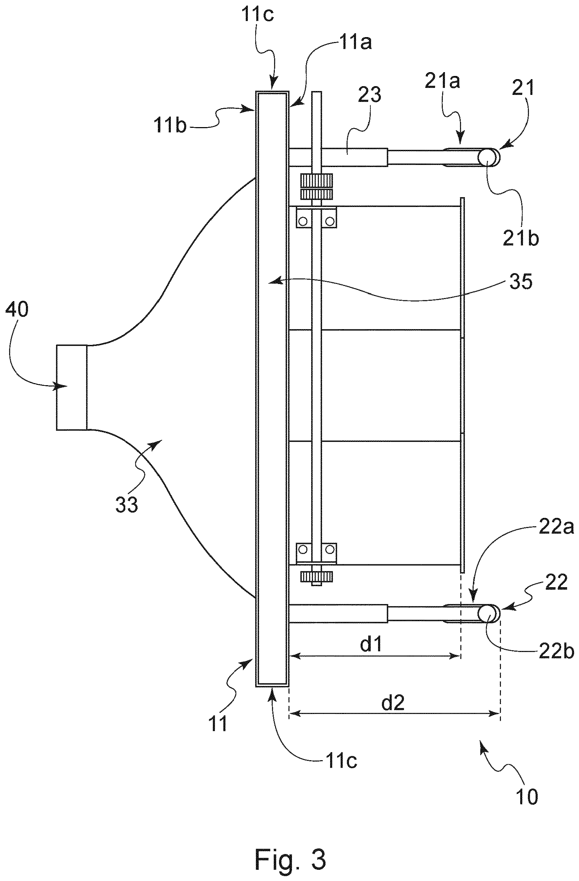

Referring in particular to Fig. 3, the cavity 35 defined within the structure 11 can be seen in greater detail.

As can be seen from Fig. 3, the distance "d1" between the inner plate 11a and the plane of the ends of the leaf stripping modules distal to the inner plate 11a, i.e. the plane substantially passing through the openings 29, is smaller than the distance "d2" between the inner plate 11a and the skid 21, 22. In the shown embodiment, the distance "d2", due to the fact that the rods 23 are telescopic, is an adjustable distance.

In a further embodiment of the invention (not shown), the leaf stripping machine 10 comprises leaf stripping modules arranged both on one side of the supporting structure 11 and on the opposite side of said supporting structure 11. This configuration allows to carry out a double-row leaf stripping operation, i.e. with a single path between the rows of a row crop, for example of a vineyard, both walls of the two rows facing the machine 10 can be simultaneously leaf stripped. In this embodiment, the leaf stripping modules can be associated with a set of electromechanical means or with a set of hydraulic cylinders allowing to adjust the distance of the machine from the rows according to the distance between the rows. According to this embodiment, the leaf stripping machine 10 may include, for example, a set of sensors detecting specific parameters, such as, for example, the distance of the machine from the stems of the plants to be leaf stripped, the presence / absence of foliage, the inversion of direction, so that a correct leaf stripping operation can be carried out. The set of sensors is connected to an electronic control unit. In this embodiment, the suction device, when common to all the leaf stripping modules, can be mounted near the bottom flank of the supporting structure.

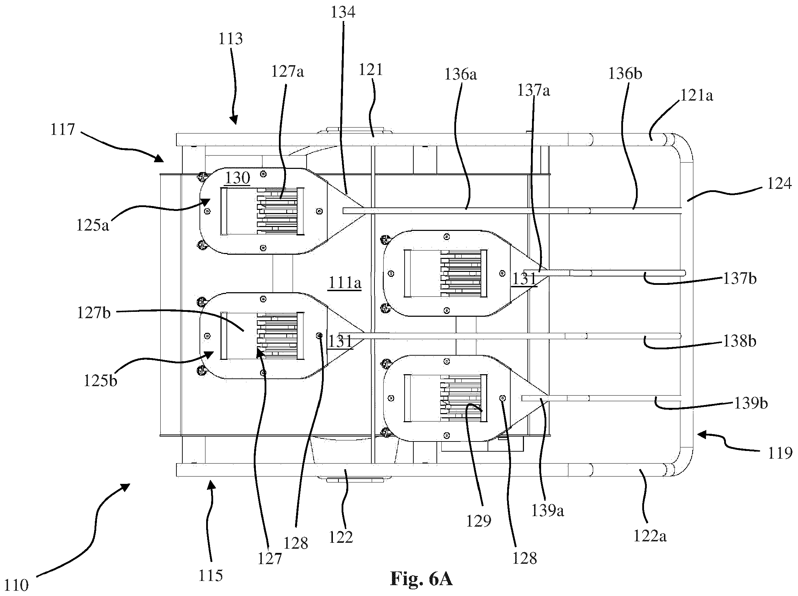

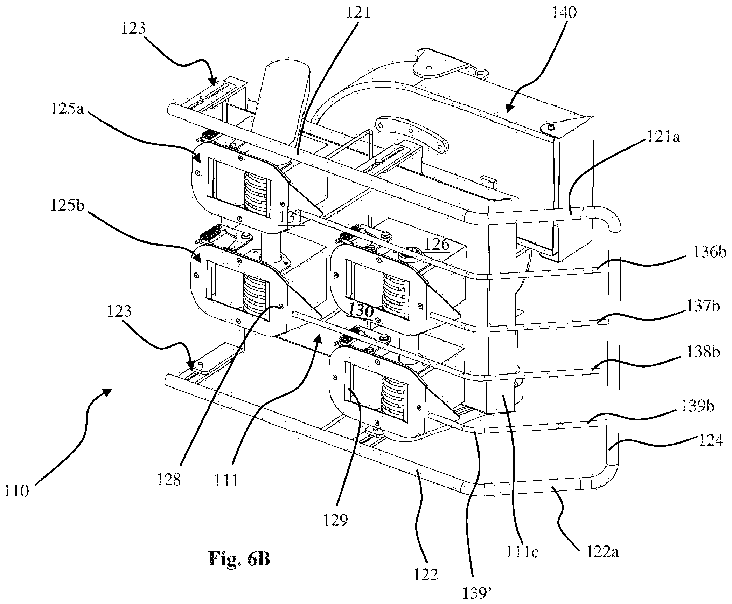

With reference to Figs. 6A-6B, a leaf stripping machine according to a second embodiment of the invention is shown, which machine has been indicated as a whole by reference 110. In this embodiment, the skids 121, 122, associated with the box-like shaped supporting structure 111 close to the top flank 113 and, respectively, to the bottom flank 115 thereof, have the two ends 121a, 122a at the front flank 119 of the machine bent towards the supporting structure 111 and connected to each other by means of a rod 124. The rod 124 is transverse with respect to the longitudinal direction of the skids 121, 122, more particularly perpendicular to the longitudinal direction of the skids 121, 122, and is arranged close to the supporting structure 111 so as to define, in combination with said skids, a front edge bent towards the supporting structure 111. In this way, tearing off branches or shoots of a wall of leaves of the row crop while the machine 110 is advancing is avoided, as the foliage of said crop slides on said folded edge of the skids 121,122. In the shown embodiment, the skids 121, 122 are secured to the supporting structure 111 by securing means 123 comprising brackets and screws. In this respect, the supporting structure 111 is provided with corresponding brackets, so as to allow the skids 121,122 to be bolted to said structure 111. In the shown embodiment, the leaf stripping machine 110 comprises four leaf stripping modules 125a, 125b, 125c, 125d, each comprising a pair of counter-rotating rolls 127, one of which is a driving, i.e. motorized, roll 127a, and the other one is a driven, i.e. idle, roll 127b, which is driven in rotation by the driving roll 127b. Each pair of counter-rotating rolls 127 is received inside a substantially parallelepiped-shaped housing 126, fixed to the supporting structure 111. Each leaf stripping module 125a, 125b, 125c, 125d is provided with an opening 129 for the passage of leaves, which is positioned in a plane distal to an inner plate 111a of the supporting structure 111.

Advantageously, each leaf stripping module 125a, 125b, 125c, 125d is equipped with a triangular separating knife 131, which extends at the front of the opening 129 and defines a frame 30 surrounding the opening 129. Said frame 130 is fixed, for example by means of screws 128, to the housing 126 in which the counter-rotating rolls 127a, 127b are received. The machine 110 also comprises separating elements 136,137,138,139 provided between the front flank 119 of the supporting structure 111 and the leaf stripping modules 125a-125d which separating elements define as many separation edges capable of moving aside the front leaves of the row, i.e. the outermost leaves close to the leaf stripping machine 110, so as to allow the leaf stripping modules 125a-125d to strip the rear leaves only of the leaf wall, i.e. the innermost leaves distal to the leaf stripping machine 110. In the shown embodiment, each separating element 136, 137, 138, 139 comprises a first longitudinal rectilinear portion 136a, 137a, 138a, 139a extending towards the front flank 119 and a second portion 136b, 137b, 138b, 139b bent towards the supporting structure 111 and aligned with the direction of the first portion 136a, 137a, 138a, 139a. In the shown embodiment, the separating elements 136,137,138,139 are defined by corresponding rods or metal bars, the first portion 136a, 137a, 138a, 139a of which is fixed to the frame 130 of each leaf stripping module 125a-125d and the second portion 136b, 137b, 138b, 139b of which is fixed, either rigidly or with the possibility of adjustment along the transverse rod 124, to the rod 124 connecting the skids 121,122. In the shown embodiment, therefore, the entire structure comprising the skids 121,122, the separating elements 136,137,138,139 and the separating knives 131, defining respective frames 130, is a removable structure secured to the machine 110 by means of suitable securing means 123 and 128.

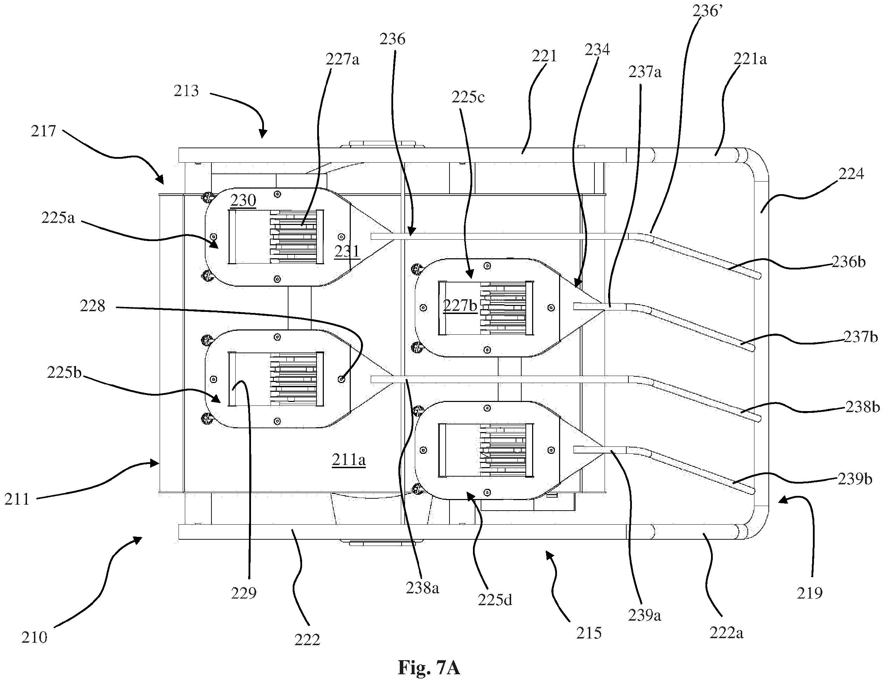

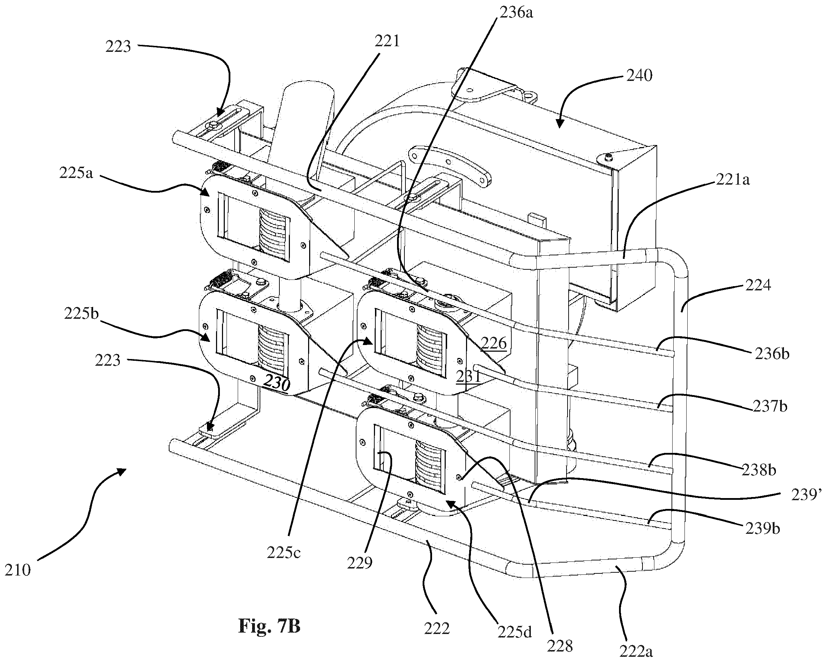

With reference to Figs. 7A-7B, a leaf stripping machine according to a third embodiment of the invention is shown, which machine has been indicated as a whole by reference 210. In this embodiment, unlike the shape previously shown in Figs. 6A-6B, the separating elements 236,237,238,239 comprise a first rectilinear portion 236a, 237b, 238c, 238d extending towards the front flank 219 of the supporting structure 211 and fixed to the frame 230 defined by the separating knife 231, and a second portion 236b, 237b, 238b, 239b bent towards the supporting structure 211 and inclined downwards, i.e. towards the bottom flank 215 of the supporting structure 211. The angle of inclination towards the bottom flank 215 of the supporting structure 211, i.e. the angle defined by the first rectilinear portion 236a, 237b, 238c, 238d and the second portion 236b, 237b, 238b, 239b of each separating element 236,237,238,239 is between 30° and 60°, and preferably about 45°. Advantageously, this configuration allows the separating elements 236,237,238,239 to define corresponding deflectors with respect to the separating knives 231. Therefore, when the machine 210 advances in the "d" direction, the leaves of the wall of leaves of the row crop on which the machine operates, are intercepted at first by said separating elements 236,237,238,239 and, subsequently, by the leaf stripping modules 225a-225d with which the separating elements 236,237,238,239 are associated. In the shown embodiment, the second portion 236b, 237b, 238b, 239b inclined towards the bottom flank 215 of the supporting structure 211 is fixed, for example by welding, to the connecting rod 224 of the skids 221,222 and therefore is permanently inclined towards the bottom flank 215. Alternatively, said second portion 236b, 237b, 238b, 239b can be fixed to the rod 224 in an adjustable way, so as to vary the inclination of said second portion or to reverse the inclination towards the top flank 213. In other embodiments, it is possible to provide a driving element which allows to modify or adjust the inclination of the second portion of the separating element, i.e. which allows to orient it in one of the following positions: inclined towards the bottom flank of the supporting structure (as shown in Figs. 7A-7B), inclined towards the top flank of the supporting structure (not shown) or aligned with the direction of a corresponding first rectilinear portion of each separating element (as shown in Figs. 6A-6B). The adjustment of the inclination of the second portion of the separating element is advantageous, for example, in leaf stripping machines designed to perform leaf stripping in two advancing directions of the machine opposite to each other, i.e. in the machines that, once leaf stripping has been carried out along a wall of a first row, can be tilted by 180 ° for allowing, in the return path of a tractor, when the leaf stripping machine is associated therewith, to carry out leaf stripping of a second wall of another row, generally parallel to the first one and facing the same direction, for example facing south. In order to guarantee an optimal deflecting function of each separating element provided between the leaf stripping modules and the front flank of the supporting structure, it is preferable that the second portion is inclined towards the bottom flank of the supporting structure. It is evident that, when tilting the machine by 180° with respect to a vertical longitudinal median plane, the position of the top and bottom flanks of the supporting structure will also be tilted.

Always referring to the embodiment shown in Figs. 7A-7B, when the machine is tilted by 180°, as mentioned above, the current bottom flank 219 will become the top flank and vice versa. Therefore, the second portion 236b, 237b, 238b, 239b of each separating element will be inclined towards the new top flank and not towards the new bottom flank of the supporting structure. Thanks to the provision of driving elements, such as hydraulic cylinders or other known mechanical means, it is therefore possible to adjust the inclination of the second portion 236b, 237b, 238b, 239b of each separating element 236,237,238,239, in order to orient it towards the new bottom flank of the supporting structure.

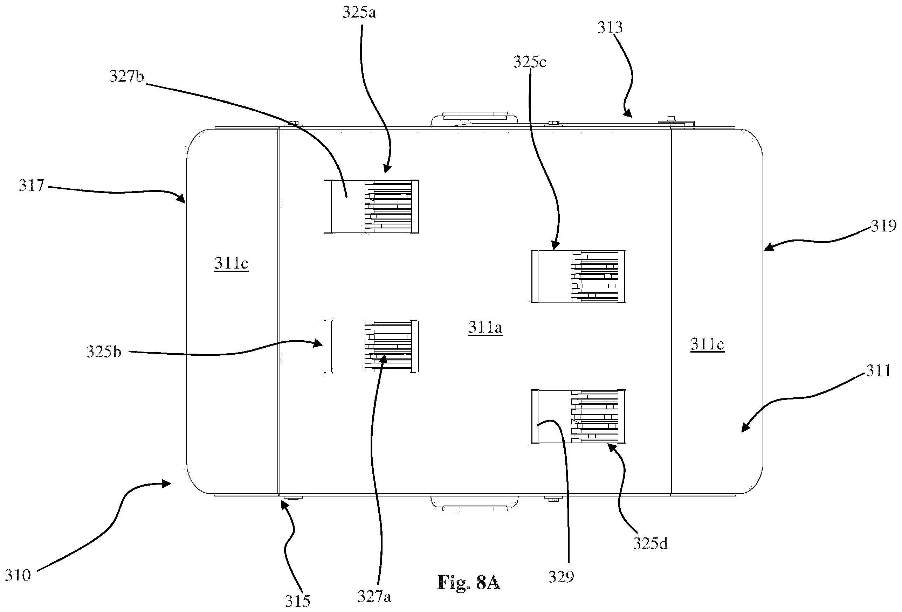

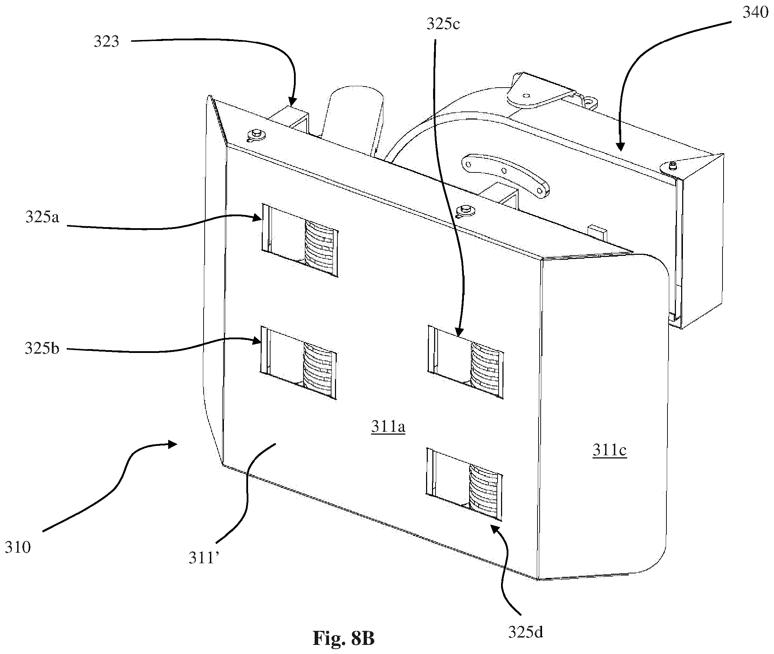

Referring now to Figs. 8A-8B, an embodiment, not according to the invention, of the machine 310 is shown, in which the supporting structure 311 comprises a common housing for all the leaf stripping modules 325a-325d, in particular a box-like structure 311', inside which said leaf stripping modules are received. Advantageously, this embodiment can be associated with the machines shown with reference to the embodiments described above, if it is desired to carry out a leaf stripping operation that does not require the removable structure defined by the skids, the separating knives and the separating elements defining the deflectors. In this embodiment, the front 319 and rear 317 flanks of the box-like structure 311' are bent towards the plate 311b of the supporting structure 311, at an angle between 30° and 60°, more preferably 45°. Therefore, the user can adopt this configuration for the leaf stripping machine, by removing the structure defined by the skids, the knives and the separating elements and associating the box-like structure 311', as shown in Figs. 8A-8B.

## Claims

1. Leaf stripping machine (10) for row crops, comprising:
- a supporting structure (11, 111, 211) in which, when the machine is in a working configuration, a top flank (13, 113, 213), a bottom flank (15, 115, 215), a rear flank (17, 117, 217) and a front flank (19, 119, 219) are defined;
- at least one skid (21, 22, 121, 122, 221, 222) attached in a removable way to said supporting structure (11, 111, 211) by means of suitable securing means (23, 123, 223), said at least one skid (21, 22, 121, 122, 221, 222) extending in a longitudinal direction substantially parallel to a direction ("d") of advancement of said machine (10, 110, 210);
- a plurality of leaf stripping modules (25a, 25b, 25c, 125a - 125d, 225a - 225d), arranged to strip leaves from a row crop, said leaf stripping modules being attached to said supporting structure (11) and associated to at least one suction device (40, 140, 240);
- each of said leaf stripping modules (25a, 25b, 25c, 125a - 125d, 225a - 225d) being provided with a pair of counter-rotating rolls (27, 127, 227), at least one of the rolls (27a, 127a, 227a) of said pair of rolls (27) being motorized, and with an opening (29) for the passage of leaves, in a distal plane substantially parallel to a working plane of the machine, **characterized in that** at least one of said leaf stripping modules (25a, 25b, 25c, 125a - 125d, 225a - 225d) comprises a separating knife (31, 131, 231) extending at the front of said opening (29) of the corresponding leaf stripping module.

2. Leaf stripping machine (10, 110, 210) according to claim 1, **characterized in that** said separating knife (31, 131, 231) has a wedge-like, triangular or spearpoint-like shape and extends at the front of said opening (29, 129, 229) in the advancement direction of the machine.

3. Leaf stripping machine (10, 110, 210) according to claim 2, **characterized in that** said separating knife (31, 131, 231) defines a portion (34, 134, 234) having the shape of an isosceles triangle, the angle defined by two congruent sides of said isosceles triangle shape lying along a longitudinal direction intersecting said opening (29) at about half of said opening.

4. Leaf stripping machine (10, 110, 210) according to claim 3, **characterized in that** said separating knife (31, 131, 231) comprises a plate element extending in a plane parallel to the plane of the corresponding opening (29, 129, 229) or coincident therewith.

5. Leaf stripping machine (110, 210) according to claim 3 or 4, **characterized in that** said portion (134, 234) is bent towards the supporting structure (111, 211) at an angle between 20° and 30° relative to the plane of the opening (29, 129, 229).

6. Leaf stripping machine (10, 110, 210) according to any of the preceding claims, **characterized in that** separating elements (37, 39, 136 - 139, 236 - 239), defining a corresponding separating edge (37', 39', 136' - 139', 236' - 239') capable of moving aside the outermost leaves of the row crop, thus making the innermost leaves of the row crop accessible to the plurality of leaf stripping modules (25a, 25b, 25c), are provided between said leaf stripping modules (25a, 25b, 25c, 125a - 125d, 225a - 225d) and the front flank (19, 119, 219) of said supporting structure (11, 111, 211).

7. Leaf stripping machine (10, 110, 210) according to claim 5, **characterized in that** said separating elements (37, 39, 136 - 139, 236 - 239) comprise a rod or metal bar having a first rectilinear longitudinal portion (37a, 39a, 136a - 139a, 236a - 239a) extending in a plane coincident with the plane of said separating knife (31, 131, 231), and a second portion (37b, 39b, 136b - 139b, 236b - 239b) bent towards the supporting structure (11, 111, 211) and transverse to said supporting structure (11, 111, 211).

8. Leaf stripping machine (110) according to any of the claims 5 or 6, **characterized in that** the second portion (136b - 139b) of a corresponding separating element (136 - 139), bent towards the supporting structure (111, 211), is aligned (136b - 139b) with the first rectilinear portion (136a - 139a) of said separating element (136 - 139) along a longitudinal direction substantially parallel to the skids (121,122).

9. Leaf stripping machine (210) according to claim 5 or 6, **characterized in that** the second portion (236b - 239b) of a corresponding separating element (236 - 239) is inclined relative to said rectilinear portion (236a - 239a) towards a bottom flank (215) of the supporting structure (211).

10. Leaf stripping machine (10, 110, 210) according to any of the claims 5 or 6 or 7, **characterized in that** it comprises at least one driving member arranged to control the inclination angle formed between the second bent portion (37b, 39b, 136b - 139b, 236b - 239b) and the first rectilinear portion (37a, 39a, 136a - 139a, 236a - 236a) of a corresponding separating element (37, 39, 136 - 139, 236 - 239).

11. Leaf stripping machine (10, 110, 210) according to any of the preceding claims, **characterized in that** said securing means (23, 123, 223) of the at least one skid (21, 22, 121, 122, 221, 222) are substantially perpendicular to said supporting structure (11, 111, 211) and comprise telescopic rods or brackets.

12. Leaf stripping machine (10, 110, 210) according to any of the preceding claims, **characterized in that** it comprises a pair of skids (21, 22, 121, 122, 221, 222) arranged close to said top (13, 113, 213) and bottom (15, 115, 215) flanks of the supporting structure (11, 111,211).

13. Leaf stripping machine (110, 210) according to claim 12, **characterized in that** each of said skids has a front end (21a, 22a, 121a, 122a, 221a, 222a) and a rear end (21b,22b), which are bent towards the supporting structure (11, 111, 211) and form an angle between 30° and 60° with a rectilinear portion of said skids (21, 22, 121, 122, 221, 222).

14. Leaf stripping machine (110, 210) according to claim 12, **characterized in that** the front ends (121a, 122a, 221a, 222b) of said skids (121, 122, 221, 222) are connected to a rod (124, 224) at the front flank (119, 219) of the supporting structure (111, 211).

15. Leaf stripping machine (10, 110, 210, 310) according to any of the preceding claims, **characterized in that** said leaf stripping modules (25a - 25d, 125a - 125d, 225a - 225d) each comprises a housing (26, 126, 226) suitable for receiving said pair of rolls (27, 127, 227).

## Patentansprüche

1. Laubschneider (10) für Reihenkulturen, umfassend:
eine Stützstruktur (11, 111, 211) in der, wenn sich die Maschine in einer Arbeitskonfiguration befindet, eine obere Seite (13, 113, 213), eine untere Seite (15, 115, 215), eine hintere Seite (17, 117, 217) und eine vordere Seite (19, 119, 219) definiert sind;
wenigstens eine Kufe (21, 22, 121, 122, 221, 222), die in abnehmbarer Weise an der Stützstruktur (11, 111, 211), durch geeignete Sicherungselemente (23, 123, 223), befestigt ist und die wenigstens eine Kufe (21, 22, 121, 122, 221, 222) sich in einer Längsrichtung im Wesentlichen parallel zu einer Vorschubrichtung (d) des Laubschneiders (10, 110, 210) erstreckt;
eine Vielzahl von Laubschneidemodulen (25a, 25b, 25c, 125a - 125d, 225a - 225d), die angeordnet sind, um Laub von Reihenkulturen zu entfernen, an einer Stützstruktur (11, 111, 211) angebracht sind und mit mindestens einer Absaugvorrichtung (40, 140, 240) verbunden sind;
ein, jedem Laubschneidemodul (25a, 25b, 25c, 125a - 125d, 225a - 225d) bereitgestelltes, Paar gegenläufiger Walzen (27, 127, 227), wobei mindestens eine der Walzen (27a, 127a, 227a) des Walzenpaares (27) motorisiert ist, und mit einer Öffnung (29) für den Durchlass von Blättern in einer distalen Ebene, die im Wesentlichen parallel zu einer Arbeitsebene der Maschine liegt, **dadurch gekennzeichnet, dass** mindestens eines der Laubschneidemodule (25a, 25b, 25c, 125a - 125d, 225a - 225d) ein Trennmesser (31, 131, 231) umfasst, das sich an der Vorderseite der Öffnung (29) des entsprechenden Laubschneidemoduls erstreckt.

2. Laubschneider (10, 110, 210) gemäß Anspruch 1, **dadurch gekennzeichnet, dass** das Trennmesser (31, 131, 231) eine keilförmige, dreieckige oder spitz zulaufende Form aufweist und sich vor der Öffnung (29, 129, 229) in Vorschubrichtung des Laubschneiders (10, 100, 210) erstreckt.

3. Laubschneider (10, 110, 210) gemäß Anspruch 2, **dadurch gekennzeichnet, dass** das Trennmesser (31, 131, 231) einen Abschnitt (34, 134, 234) definiert, der die Form eines gleichschenkligen Dreiecks hat, wobei der Winkel, der durch zwei kongruente Seiten der gleichschenkligen Dreiecksform aufgespannt wird, entlang einer Längsrichtung liegt, die die Öffnung (29) in etwa bei der Hälfte schneidet.

4. Laubschneider (10, 110, 210) gemäß Anspruch 3, **dadurch gekennzeichnet, dass** das Trennmesser (31, 131, 231) ein Plattenelement umfasst, das sich in einer Ebene parallel zur oder zusammenfallend mit der Ebene der entsprechenden Öffnung (29, 129, 229) erstreckt.

5. Laubschneider (110, 210) gemäß Anspruch 3 oder 4, **dadurch gekennzeichnet, dass** der Abschnitt (134, 234) in Richtung der Stützstruktur (111, 211) in einem Winkel zwischen 20° und 30° relativ zur Ebene der Öffnung (29,129, 229) gebogen ist.

6. Laubschneider (10, 110, 210) gemäß einem der vorhergehenden Ansprüche, **dadurch gekennzeichnet, dass** Trennelemente (37, 39, 136 - 139, 236 - 239), die eine entsprechende Trennkannte (37', 39', 136' - 139', 236' - 239') definieren, die in der Lage ist, die äußersten Blätter der Reihenkulturen beiseite zu schieben und so die innersten Blätter der Reihenkulturen für die Vielzahl von Laubschneidemodulen (25a, 25b, 25c) zugänglich machen, zwischen den Laubschneidemodulen (25a, 25b, 25c, 125a - 125d, 225a - 225d) und der Stützstruktur (11, 111, 211) bereitgestellt sind.

7. Laubschneider (10, 110, 210) gemäß Anspruch 5, **dadurch gekennzeichnet, dass** die Trennelemente (37, 39, 136 - 139, 236 - 239) eine Stange oder einen Metallstab umfassen, die beziehungsweise der einen ersten geradlinigen Längsabschnitt (37a, 39a, 136a - 139a, 236a - 239a), der sich in einer mit der Ebene des Trennmessers (31, 131, 231) zusammenfallenden Ebene erstreckt, und einen zweiten Abschnitt (37b, 39b, 136b - 139b, 236b - 239b), der in Richtung der Stützstruktur (11, 111, 211) und quer zu der Stützstruktur (11, 111, 211) gebogen ist, aufweist.

8. Laubschneider (210) gemäß Anspruch 5 oder 6, **dadurch gekennzeichnet, dass** der zweite Abschnitt (136b - 139b) eines entsprechenden Trennelements (136 - 139), das in Richtung der Stützstruktur (111, 211) gebogen ist, an dem ersten geradlinigen Abschnitt (136a - 139a) des entsprechenden Trennelements (136 - 139) entlang einer im Wesentlichen zu den Kufen (121, 122) parallelen Längsrichtung ausgerichtet ist.

9. Laubschneider (210) gemäß Anspruch 5 oder 6, **dadurch gekennzeichnet, dass** der zweite Abschnitt (236b - 239b) eines entsprechenden Trennelements (236 - 239) relativ zum geradlinigen Abschnitt (236a - 239a) in Richtung der unteren Seite (215) der Stützstruktur (211) geneigt ist.

10. Laubschneider (10, 110, 210) gemäß Anspruch 5, 6 oder 7, **dadurch gekennzeichnet, dass** der Laubschneider (10, 110, 210) mindestens ein Antriebselement umfasst, das so angeordnet ist, dass es den Neigungswinkel steuert, der zwischen dem zweiten geneigten Abschnitt (37b, 39b, 136b - 139b, 236b - 239b) und dem ersten geradlinigen Abschnitt (37a, 39a, 136a - 139a, 236a - 239a) eines entsprechenden Trennelements (37, 39, 136 - 139, 236 - 239) gebildet wird.

11. Laubschneider (10, 110, 210) gemäß eines der vorhergehenden Ansprüche, **dadurch gekennzeichnet, dass** die Sicherungselemente (23, 123, 223) der mindestens einen Kufe (21, 22, 121, 122, 221, 222) im Wesentlichen senkrecht zu der Stützstruktur (11, 111, 211) ausgebildet sind und Teleskopstangen oder -halterungen umfassen.

12. Laubschneider (10, 110, 210) gemäß eines der vorhergehenden Ansprüche, **dadurch gekennzeichnet, dass** der Laubschneider (10, 110, 210) ein paar Kufen (21, 22, 121, 122, 221, 222) umfasst, das dicht an der oberen Seite (13, 113, 213) und der unteren Seite (15, 115, 215) der Stützstruktur (11, 111, 211) angebracht ist.

13. Laubschneider (110, 210) gemäß Anspruch 12, **dadurch gekennzeichnet, dass** jede der Kufen ein vorderes Ende (21a, 22a, 121a, 122a, 221a, 222a) und ein hinteres Ende (21b, 22b) aufweist, die in Richtung der Stützstruktur gebogen sind und einen Winkel zwischen 30° und 60° zu einem geradlinigen Abschnitt der Kufen (21, 22, 121, 122, 221, 222) aufweisen.

14. Laubschneider (110, 210) gemäß Anspruch 12, **dadurch gekennzeichnet, dass** die vorderen Enden (121a, 122a, 221a, 222a) der Kufen (121, 122, 221, 222) durch eine Stange (124, 224) mit der vorderen Seite (119, 219) der Stützstruktur (111, 211) verbunden sind.

15. Laubschneider (10, 110, 210, 310) gemäß eines der vorhergehenden Ansprüche, **dadurch gekennzeichnet, dass** die Laubschneidemodule (25a - 25d, 125a - 125d, 225a - 225d) jeweils ein Gehäuse (26, 126, 226) umfassen, das zur Aufnahme der Walzenpaare (27, 127, 227) geeignet ist.

## Revendications

1. Machine effeuilleuse (10) pour cultures en rangs, comprenant :
- une structure de support (11, 111, 211), dans laquelle, lorsque la machine est dans une configuration de travail, un flanc de dessus (13, 113, 213), un flanc de dessous (15, 115, 215), un flanc arrière (17, 117, 217) et un flanc avant (19, 119, 219) sont définis ;
- au moins un patin (21, 22, 121, 122, 221, 222) attaché de manière amovible à ladite structure de support (11, 111, 211) au moyen de moyens de fixation (23, 123, 223) appropriés, ledit au moins un patin (21, 22, 121, 122, 221, 222) s'étendant dans une direction longitudinale sensiblement parallèle à une direction (« d ») d'avancée de ladite machine (10, 110, 210) ;
- une pluralité de modules d'effeuillage (25a, 25b, 25c, 125a-125d, 225a-225d), agencés pour effeuiller une culture en rangs, lesdits modules d'effeuillage étant attachés à ladite structure de support (11) et associés à au moins un dispositif d'aspiration (40, 140, 240) ;
- chacun desdits modules d'effeuillage (25a, 25b, 25c, 125a-125d, 225a-225d) étant muni d'une paire de rouleaux contrarotatifs (27, 127, 227), au moins l'un des rouleaux (27a, 127a, 227a) de ladite paire de rouleaux (27) étant motorisé, et d'une ouverture (29) pour le passage de feuilles, dans un plan distal sensiblement parallèle à un plan de travail de la machine, **caractérisée en ce qu'**au moins l'un desdits modules d'effeuillage (25a, 25b, 25c, 125a-125d, 225a-225d) comprend une lame de séparation (31, 131, 231) s'étendant à l'avant de ladite ouverture (29) du module d'effeuillage correspondant.

2. Machine effeuilleuse (10, 110, 210) selon la revendication 1, **caractérisée en ce que** ladite lame de séparation (31, 131, 231) a une forme de coin, triangulaire ou de fer de lance et s'étend à l'avant de ladite ouverture (29, 129, 229) dans la direction d'avancée de la machine.

3. Machine effeuilleuse (10, 110, 210) selon la revendication 2, **caractérisée en ce que** ladite lame de séparation (31, 131, 231) définit une portion (34, 134, 234) ayant la forme d'un triangle isocèle, l'angle défini par deux côtés congruents de ladite forme de triangle isocèle s'étendant suivant une direction longitudinale croisant ladite ouverture (29) à environ la moitié de ladite ouverture.

4. Machine effeuilleuse (10, 110, 210) selon la revendication 3, **caractérisée en ce que** ladite lame de séparation (31, 131, 231) comprend un élément de plaque s'étendant dans un plan parallèle au plan de l'ouverture (19, 129, 229) correspondante ou coïncident avec celui-ci.

5. Machine effeuilleuse (10, 110, 210) selon la revendication 3 ou 4, **caractérisée en ce que** ladite portion (134, 234) est fléchie vers la structure de support (111, 211) selon un angle entre 20° et 30° par rapport au plan de l'ouverture (29, 129, 229).

6. Machine effeuilleuse (10, 110, 210) selon l'une quelconque des revendications précédentes, **caractérisée en ce que** des éléments de séparation (37, 39, 136-139, 236-239), définissant un bord de séparation (37', 39', 136'-139', 236'-239') correspondant capable de déplacer sur le côté les feuilles les plus externes de la culture en rangs, rendant ainsi les feuilles les plus internes de la culture en rangs accessibles à la pluralité de modules d'effeuillage (25a, 25b, 25c), sont prévus entre lesdits modules d'effeuillage (25a, 25b, 25c, 125a-125d, 225a-225d) et le flanc avant (19, 119, 219) de ladite structure de support (11, 111, 211).

7. Machine effeuilleuse (10, 110, 210) selon la revendication 5, **caractérisée en ce que** lesdits éléments de séparation (37, 39, 136-139, 236-239), comprennent une tige ou une barre en métal ayant une première portion longitudinale rectiligne (37a, 39a, 136a-139a, 236a-239a) s'étendant dans un plan coïncident avec le plan de ladite lame de séparation (31, 131, 231), et une seconde portion (37b, 39b, 136b-139b, 236b-239b) fléchie vers la structure de support (11, 111, 211) et transversale à ladite structure de support (11, 111, 211).

8. Machine effeuilleuse (110) selon l'une quelconque des revendications 5 ou 6, **caractérisée en ce que** la seconde portion (136b-139b) d'un élément de séparation (136-139) correspondant, fléchie vers la structure de support (111, 211), est alignée (136b-139b) avec la première portion rectiligne (136a-139a) dudit élément de séparation (136-139) suivant une direction longitudinale sensiblement parallèle aux patins (121, 122).

9. Machine effeuilleuse (210) selon la revendication 5 ou 6, **caractérisée en ce que** la seconde portion (236b-239b) d'un élément de séparation (236-239) correspondant est inclinée par rapport à ladite portion rectiligne (236a-239a) vers un flanc de dessous (215) de la structure de support (211).

10. Machine effeuilleuse (10, 110, 210) selon l'une quelconque des revendications 5 ou 6 ou 7, **caractérisée en ce qu'**elle comprend au moins un organe d'entraînement agencé pour commander l'angle d'inclinaison formé entre la seconde portion fléchie (37b, 39b, 136b-139b, 236b-239b) et la première portion rectiligne (37a, 39a, 136a-139a, 236a-236a) d'un élément de séparation (37, 39, 136-139, 236-239) correspondant.

11. Machine effeuilleuse (10, 110, 210) selon l'une quelconque des revendications précédentes, **caractérisée en ce que** lesdits moyens de fixation (23, 123, 223) de l'au moins un patin (21, 22, 121, 122, 221, 222) sont sensiblement perpendiculaires à ladite structure de support (11, 111, 211) et comprennent des tiges ou ferrures télescopiques.

12. Machine effeuilleuse (10, 110, 210) selon l'une quelconque des revendications précédentes, **caractérisée en ce qu'**elle comprend une paire de patins (21, 22, 121, 122, 221, 222) agencés à proximité desdits flancs de dessus (13, 113, 213) et de dessous (15, 115, 215) de la structure de support (11, 111, 211).

13. Machine effeuilleuse (110, 210) selon la revendication 12, **caractérisée en ce que** chacun desdits patins a une extrémité avant (21a, 22a, 121a, 122a, 221a, 222a) et une extrémité arrière (21b, 22b), qui sont fléchies vers la structure de support (11, 111, 211) et forment un angle entre 30° et 60° avec une portion rectiligne desdits patins (21, 22, 121, 122, 221, 222).

14. Machine effeuilleuse (110, 210) selon la revendication 12, **caractérisée en ce que** les extrémités avant (121a, 122a, 221a, 222a) desdits patins (121, 122, 221, 222) sont reliées à une tige (124, 224) au niveau du flanc avant (119, 219) de la structure de support (111, 211) .

15. Machine effeuilleuse (10, 110, 210, 310) selon l'une quelconque des revendications précédentes, **caractérisée en ce que** lesdits modules d'effeuillage (25a à 25d, 125a-125d, 225a-225d) comprennent chacun un boîtier (26, 126, 226) approprié pour recevoir ladite paire de rouleaux (27, 127, 227).
